(19)

**Europäisches Patentamt**

**European Patent Office**

**Office européen des brevets**

(11) **EP 3 567 741 B1**

(12) **EUROPEAN PATENT SPECIFICATION**

(45) Date of publication and mention
of the grant of the patent:
**11.01.2023 Bulletin 2023/02**

(21) Application number: **17890687.1**

(22) Date of filing: **28.12.2017**

(51) International Patent Classification (IPC):
***H04B 7/0456*** *(2017.01)*   ***H04B 7/0452*** *(2017.01)*
***H04B 7/06*** *(2006.01)*   ***H04L 25/02*** *(2006.01)*

(52) Cooperative Patent Classification (CPC):
**H04B 7/0452; H04B 7/0456; H04B 7/0617;
H04L 25/0246; H04L 25/0256**

(86) International application number:
**PCT/CN2017/119585**

(87) International publication number:
**WO 2018/126990 (12.07.2018 Gazette 2018/28)**

(54) **USER SELECTION METHOD AND DEVICE UTILIZED IN SPATIAL DIVISION**

IN DER RÄUMLICHEN TEILUNG VERWENDETES BENUTZERAUSWAHLVERFAHREN UND
-VORRICHTUNG

PROCÉDÉ ET DISPOSITIF DE SÉLECTION D'UTILISATEUR MIS EN UVRE DANS LA DIVISION
SPATIALE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **06.01.2017 CN 201710010405**

(43) Date of publication of application:
**13.11.2019 Bulletin 2019/46**

(73) Proprietor: **ZTE Corporation
Shenzhen, Guangdong 518057 (CN)**

(72) Inventors:
 • **WU, Hao**
 **Shenzhen**
 **Guangdong 518057 (CN)**
 • **LI, Jie**
 **Shenzhen**
 **Guangdong 518057 (CN)**
 • **OUYANG, Enshan**
 **Shenzhen**
 **Guangdong 518057 (CN)**
 • **Li, Jun**
 **Shenzhen**
 **Guangdong 518057 (CN)**
 • **XU, Ying**
 **Shenzhen**
 **Guangdong 518057 (CN)**

(74) Representative: **Aipex B.V.
P.O. Box 30223
3001 DE Rotterdam (NL)**

(56) References cited:
 **CN-A- 101 414 874   CN-A- 101 834 646
 CN-A- 102 404 026   CN-A- 102 546 488
 US-A1- 2006 095 236   US-A1- 2016 043 783**

 • **MAJID SHAKHSI DASTGAHIAN ET AL: "A novel
 vector perturbation based on joint transceiver
 algorithm in cooperative mu-MIMO",
 ELECTRICAL ENGINEERING (ICEE), 2011 19TH
 IRANIAN CONFERENCE ON, IEEE, 17 May 2011
 (2011-05-17), pages 1-6, XP031896158, ISBN:
 978-1-4577-0730-8**
 • **GAMI HIREN ET AL: "Semiblind Multiuser MIMO
 Channel Estimators Using PM and RRQR
 Methods", COMMUNICATION NETWORKS AND
 SERVICES RESEARCH CONFERENCE, 2009.
 CNSR '09. SEVENTH ANNUAL, IEEE,
 PISCATAWAY, NJ, USA, 11 May 2009
 (2009-05-11), pages 1-5, XP031456635, ISBN:
 978-1-4244-4155-6**

**(Cont. next page)**

• KINJO SHIGENORI ET AL: "A Tomlinson-Harashima precoding for correlated MIMO channels", 2013 INTERNATIONAL SYMPOSIUM ON INTELLIGENT SIGNAL PROCESSING AND COMMUNICATION SYSTEMS, IEEE, 12 November 2013 (2013-11-12), pages 257-262, XP032541950, DOI: 10.1109/ISPACS.2013.6704557 [retrieved on 2014-01-06]

**Description**

**TECHNICAL FIELD**

The present disclosure relates to the field of communication technologies and, in particular, to a method and device for selecting space division multiplexing users.

**BACKGROUND**

The large-scale multiple-input and multiple-output (MIMO) technology with its great potential advantages in terms of spectral efficiency, energy efficiency, reliability and robustness may become one of revolutionary technologies in the future 5th generation mobile communication technology (5G). In the related art, space division multiplexing users are selected generally according to the correlation between two users, but it does not reflect the correlation among multiple users. The adoption of the algorithm may cause a low correlation between every two users but a high correlation between multiple users, and the selected space division multiplexing users may not be most linearly independent. If the most linearly independent users are selected among candidate users by adopting a traversal method to perform space division multiplexing, the operation amount may be rapidly increased with the increase of the number of candidate users, so the requirement of real-time performance is difficult to satisfy.

Document US20160043783A1 discloses methods and procedures for non-linear precoding based multiuser multiple input multiple output, in which a station is used to implement non-linear coding based multiuser multiple-input multiple-output (MU-MIMO). The station includes a processor that may be configured to perform a number of actions. For example, the processor receives a null packet from an access point (AP). Channel feedback is generated using the null packet. The channel feedback is sent to the AP. QR dependent information is received from the AP. Data is sent to the AP according to the QR dependent information.

Document XP31896158A (A novel Vector Perturbation Based On Joint Transceiver Algorithm In Cooperative Mu-MIMO) introduces a novel nonlinear vector perturbation approach to improve qualification of communications in a downlink multi user Multi-Input Multi-Output systems where base stations work together cooperatively. In this algorithm, nonlinear vector perturbation based on lattice reduction and VBLAST algorithms is applied at the base stations, whereas linear receiver processing and modulo operation are applied at each mobile. It is shown that the proposed algorithm effectively decomposes the multiuser MIMO channel into parallel independent single-user MIMO channels, and then, the performance of each mobile can be separately optimized. When used on the downlink of multiuser MIMO systems with multiple-antenna mobiles, this algorithm achieves significantly better performance than the ZF criterion-based non-linear preprocessing algorithm designed for the multiuser MIMO systems with single-antenna mobiles, because it effectively utilizes the processing capabilities of the mobiles. This method is comparable to nonlinear THP approach and also has outperformance rather than linear types such as block diagonalization because of conservation of the energy in a specify constraint. Moreover, the proposed algorithm achieves a much higher sum capacity at a high signal-to-noise ratio (SNR) than the known block diagonalization technique due to the effective application of the nonlinear preprocessing at the transmitter. Also we propose some methods to achieve better system performance by suitably ordering the channel matrices of different mobiles.

Document XP31456635A (Semiblind Multiuser MIMO Channel Estimators Using PM and RRQR Methods) relates to estimate the channel state information (CSI) of several transmitters that use orthogonal space-time block codes (OSTBC) to communicate with a single receiver. Based on rank revealing QR (RRQR) factorization and propagator method (PM), two new algorithms to estimate multiuser MIMO channels are proposed. The algorithm estimates the subspace spanned by the user channels use only a few training blocks to extract the users CSI from this subspace. Our both algorithms achieve better performance in comparison with reference LS based approach. Computer simulations are included to validate proposed methods. Document XP032541950A (A Tomlinson-Harashima precoding for correlated MIMO channels) relates to A Tomlinson-Harashima precoding for correlated MIMO channels. Highly correlated Multiple-Input Multiple-Output (MIMO) channels induce severe ill-conditioned MIMO channel matrices. MIMO receivers suffer from performance degradation due to the noise enhancement caused by the severe channel matrices. Precoding schemes, such as spatial Tomlinson-Harashima precoding (THP), can mitigate the performance degradation; however, the effect upon the highly correlated channels is insufficient. One way to avoid the noise enhancement is to turn off a few substreams related to the poor MIMO channels, which becomes possible by introducing an appropriate permutation matrix. We formulate a bit rate on the zero-forcing THP (ZF-THP) MIMO system, which shows that there is an optimum permutation matrix which maximizes the bit rate. We propose to apply a modified version of the sorted decomposition (SQRD) algorithm, which was originally developed for Vertical Bell Labs Layered Space Time (V-BLAST) receiver to carry out the QR decomposition of a MIMO channel matrix with permutation in its column direction simultaneously, to find a feasible permutation and create a precoder. Finally, it results in developing an efficient scheme to turn off the substreams. The proposed scheme is evaluated by computer simulations to verify its efficiency upon the correlated MIMO channels.

## SUMMARY

The present disclosure provides a method and device for selecting space division multiplexing users, according to the independent claims, so as to solve the problem of selecting space division multiplexing users. Further improvements are provided in the dependent claims.

Also provided is a method for selecting space division multiplexing users. The method includes following steps.

A channel response of each of candidate users is acquired by performing a channel estimation on received data of each of the candidate users.

A channel response matrix of all the candidate users is constructed based on the channel response of each of the candidate users.

A rank-revealing quadrature rectangle (RRQR) decomposition is performed on the channel response matrix, and at least two of the candidate users that are most linearly independent and satisfying a space division multiplexing user number required by a base station are determined as the space division multiplexing users based on a result of the RRQR decomposition.

In an exemplary embodiment, the channel response matrix of all the candidate users is constructed based on the channel response of each of the candidate users in the following manner.

The channel response matrix of all the candidate users is constructed by normalizing the channel response of each of the candidate users and taking the normalized channel response as a column element.

The RRQR decomposition is performed on the channel response matrix, and at least two of the candidate users that are most linearly independent and satisfying the space division multiplexing user number required by the base station are determined as the space division multiplexing users based on the result of the RRQR decomposition as follows.

A permutation matrix, a Q matrix and an R matrix are acquired by performing the RRQR decomposition of the channel response matrix, where the channel response matrix multiplied by the permutation matrix is equal to the Q matrix multiplied by the R matrix.

A plurality of the candidate users that are most linearly independent are determined from all the candidate users according to the permutation matrix.

At least two of the candidate users are selected among the plurality of the candidate users that are most linearly independent as the space division multiplexing users according to a total number of space division multiplexing users required by the base station.

In an exemplary embodiment, the total number of space division multiplexing users required by the base station is determined through following steps.

A beamforming weight matrix of the plurality of the candidate users that are most linearly independent is determined by using a channel response matrix, a Q matrix and an R matrix of the plurality of the candidate users that are most linearly independent.

The total number of space division multiplexing users required by the base station is determined according to a power requirement of the base station and the beamforming weight matrix of the plurality of the candidate users that are most linearly independent.

In an exemplary embodiment, after the candidate users that are most linearly independent and satisfying the space division multiplexing user number required by the base station are determined as the space division multiplexing users by using the RRQR decomposition result, a beamforming weight matrix of the space division multiplexing users is determined by using a channel response matrix, a Q matrix and an R matrix of the space division multiplexing users.

Also provided is a device for selecting space division multiplexing users. The device includes a candidate user channel response acquisition module, a channel response matrix construction module and a space division multiplexing user selection module.

The candidate user channel response acquisition module is configured to acquire a channel response of each of candidate users by performing a channel estimation on received data of each of the candidate users.

The channel response matrix construction module is configured to construct a channel response matrix of all the candidate users by using the channel response of each of the candidate users.

The space division multiplexing user selection module is configured to perform an RRQR decomposition of the channel response matrix, and determine, based on a result of the RRQR decomposition, at least two of the candidate users that are most linearly independent and satisfying a space division multiplexing user number required by a base station as the space division multiplexing users.

The space division multiplexing user selection module is configured to acquire a permutation matrix, a Q matrix and an R matrix by performing the RRQR decomposition of the channel response matrix, determine a plurality of the candidate users that are most linearly independent from all the candidate users according to the permutation matrix, and select, according to a total number of space division multiplexing users required by the base station at least two of the candidate users, among the plurality of the candidate users that are most linearly independent as the space division multiplexing users, where the channel response matrix multiplied by the permutation matrix is equal to the Q matrix multiplied by the R matrix.

In an exemplary embodiment, the space division multiplexing user selection module is further configured to determine a beamforming weight matrix of the plurality of the candidate users that are most linearly independent by using a channel response matrix, a Q matrix and an R matrix of the plurality of the candidate users that are most linearly independent, and determine a total space division multiplexing user number required by the base station according to a power requirement of the base station and the beamforming weight matrix of the plurality of the candidate users that are most linearly independent.

In an exemplary embodiment, the device further includes a beamforming weight calculation module.

The beamforming weight calculation module is configured to, after the at least two of the candidate users that are most linearly independent and satisfying the space division multiplexing user number required by the base station are determined as the space division multiplexing users by using the result of the RRQR decomposition, determine a beamforming weight matrix of the space division multiplexing users by using a channel response matrix, a Q matrix and an R matrix of the space division multiplexing users.

Also provided is a device for selecting space division multiplexing users. The device includes a processor and a memory storing instructions that, when executed by the processor, cause the processor to:

acquire a channel response of each of candidate users by performing a channel estimation on received data of each of the candidate users;

construct a channel response matrix of all the candidate users by using the channel response of each of the candidate users;

perform an RRQR decomposition on the channel response matrix, and determine, based on a result of the RRQR decomposition, at least two of the candidate users that are most linearly independent and satisfying a space division multiplexing user number required by a base station as a space division multiplexing user.

Also provided is a computer-readable storage medium, which is configured to store computer-executable instructions for executing the method described above.

The present disclosure further provides a computer program product including a computer program stored in a non-transient computer-readable storage medium. The computer program includes program instructions which, when executed by a computer, enable the computer to execute any one of the methods described above.

The present disclosure determines space division multiplexing users satisfying the number requirement through the RRQR decomposition result acquired by decomposing the channel response matrix by the RRQR algorithm, which has the low operation amount and a high operation speed, thereby selecting the space division multiplexing users with lower operation amount and greatly improving the space division multiplexing performance of the communication system.

## BRIEF DESCRIPTION OF DRAWINGS

FIG. 1 is a block diagram of a method for selecting space division multiplexing users according to an embodiment of the present disclosure.

FIG. 2 is a block diagram of a device for selecting space division multiplexing users according to an embodiment of the present disclosure.

FIG. 3 is a flowchart of a method for selecting space division multiplexing users according to an embodiment of the present disclosure.

FIG. 4 is a schematic diagram of a device for selecting space division multiplexing users according to an embodiment of the present disclosure.

FIG. 5 is a schematic diagram of a hardware structure of a device for selecting space division multiplexing users according to an embodiment of the present disclosure.

## DETAILED DESCRIPTION

In a large-scale multiple-input and multiple-output (MIMO) communication system, when there are a plurality of system users, the orthogonality among partial users is good at a high probability, so that the optimal performance may be implemented with lower complexity by adopting a zero forcing precoding algorithm.

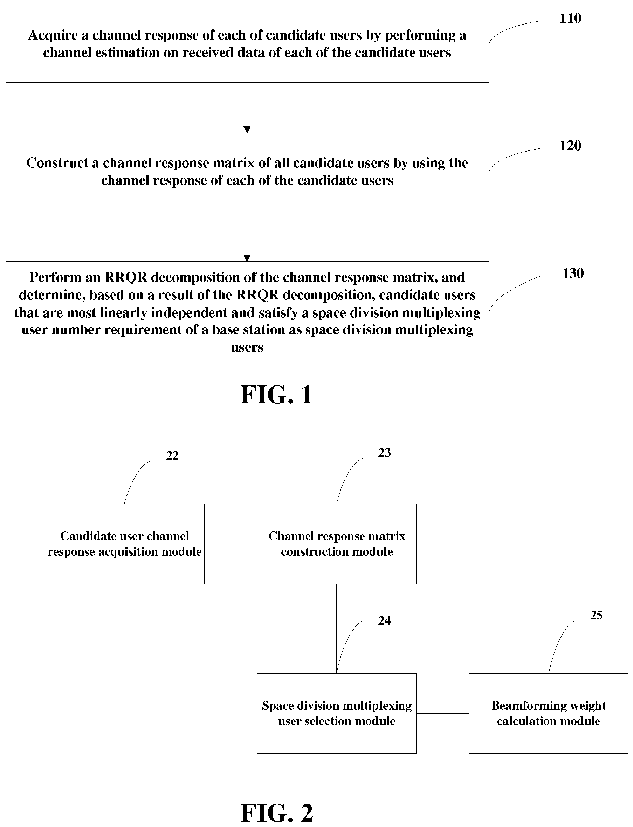

FIG. 1 is a block diagram of a method for selecting space division multiplexing users according to an embodiment of the present disclosure. As shown in FIG. 1, the method includes steps 110, 120 and 130.

In step 110, a channel response of each of candidate users is acquired by performing a channel estimation on received data of each of the candidate users. For example, the channel response of each of the candidate users is acquired by performing least square (LS) method channel estimation or minimum mean-square error (MMSE) channel estimation.

In step 120, a channel response matrix of all the candidate users is constructed by using the channel response of each of the candidate users. Optionally, the channel response matrix of all the candidate users is constructed by normalizing the channel response of each of the candidate users and then taking the normalized channel response as a column element.

In step 130, a rank-revealing quadrature rectangle (RRQR) decomposition is performed on the channel response matrix, and at least two of the candidate users that are most linearly independent and satisfying a space division multiplexing user number required by a base station are determined as space division multiplexing users based on a result of the RRQR decomposition.

The step 130 includes: determining a plurality of the candidate users that are most linearly independent by performing the RRQR decomposition of the channel response matrix, and selecting at least two of the candidate users among the plurality of the candidate users that are most linearly independent according to the space division multiplexing user number required by the base station as space division multiplexing users. A permutation matrix, a Q matrix and an R matrix are acquired by performing the RRQR decomposition of the channel response matrix, where the channel response matrix multiplied by the permutation matrix is equal to the Q matrix multiplied by the R matrix. The plurality of the candidate users that are most linearly independent are determined from all the candidate users according to the permutation matrix, and the plurality of the candidate users that are most linearly independent may be determined by searching the location of the element "1" in each column of the permutation matrix, so as to select the space division multiplexing users satisfying the space division multiplexing user number required by the base station from the plurality of the candidate users that are most linearly independent. Optionally, the space division multiplexing user number may be determined according to a power requirement of the base station and a beamforming weight matrix of the plurality of the candidate users that are most linearly independent. The beamforming weight matrix of the plurality of the candidate users that are most linearly independent is determined through a channel response matrix, a Q matrix and an R matrix of the plurality of the candidate users that are most linearly independent.

After the space division multiplexing users are determined, a beamforming weight matrix of the space division multiplexing users may be determined by using a channel response matrix, a Q matrix and an R matrix of the space division multiplexing users, so as to produce beams having directivity.

It will be understood by those of ordinary skill in the art that all or part of the steps in the method of the above embodiment may be implemented by related hardware instructed by programs, these programs may be stored in a computer-readable storage medium, and during the execution of these programs, the steps 110 to 130 or other user selection methods utilized in space division are included. The storage medium may be a read-only memory (ROM), a random access memory (RAM), a magnetic disk, an optical disk, or the like.

FIG. 2 is a block diagram of a device for selecting space division multiplexing users according to an embodiment of the present disclosure. As shown in FIG. 2, the device includes a candidate user channel response acquisition module 22, a channel response matrix construction module 23 and a space division multiplexing user selection module 24.

The candidate user channel response acquisition module 22 is configured to acquire a channel response of each of candidate users by performing a channel estimation on received data of each of the candidate users, for example, by performing the LS channel estimation or the MMSE channel estimation.

The channel response matrix construction module 23 is configured to construct a channel response matrix of all the candidate users by using the channel response of each of the candidate users. Optionally, the channel response matrix construction module 23 is configured to construct the channel response matrix of all the candidate users by normalizing the channel response of the each of the candidate users and taking the normalized channel response as a column element. The space division multiplexing user selection module 24 is configured to perform an RRQR decomposition of the channel response matrix, and determine, based on a result of the RRQR decomposition, at least two of the candidate users that are most linearly independent and satisfying a space division multiplexing user number required by a base station as space division multiplexing users. That is, the space division multiplexing user selection module 24 determines a plurality of the candidate users that are most linearly independent by performing the RRQR decomposition of the channel response matrix, and selects at least two of the candidate users from the plurality of the candidate users that are most linearly independent according to the space division multiplexing user number required by the base station.

The space division multiplexing user selection module 24 is configured to acquire a permutation matrix, a Q matrix and an R matrix by performing the RRQR decomposition of the channel response matrix, and determine the plurality of the candidate users that are most linearly independent among all the candidate users according to the permutation matrix. Optionally, the space division multiplexing user selection module 24 is configured to determine the plurality of the candidate users that are most linearly independent by searching the location of the element "1" in each column of the permutation matrix, so as to select the space division multiplexing users satisfying the space division multiplexing user number required by the base station from the plurality of the candidate users that are most linearly independent. The channel response matrix multiplied by the permutation matrix is equal to the Q matrix multiplied by the R matrix.

The space division multiplexing user number may be determined according to a power requirement of the base station and the beamforming weight matrix of the plurality of the candidate users that are most linearly independent. The beamforming weight matrix of the plurality of the candidate users that are most linearly independent may be determined according to a channel response matrix, a Q matrix and an R matrix of the plurality of the candidate users that are most linearly independent.

The device may further include a beamforming weight calculation module 25. The beamforming weight calculation module 25 is configured to, after the space division multiplexing users are determined, determine a beamforming weight matrix of the space division multiplexing users by using a channel response matrix, a Q matrix and an R matrix of the space division multiplexing users.

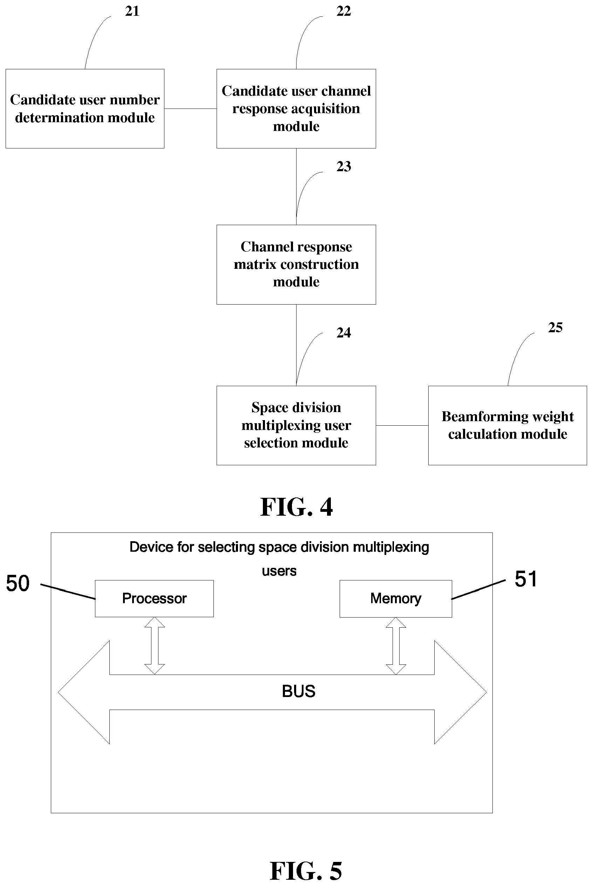

The device for selecting space division multiplexing users should be disposed on the base station. Referring to FIG. 5, the present disclosure further provides a device for selecting space division multiplexing users.

The device includes a processor 50 and a memory 51 configured to store instructions executable by the processor.

When the instructions are executed by the processor 50, the processor executes following operations.

A channel response of each of candidate users is acquired by performing a channel estimation on received data of each of the candidate users.

A channel response matrix of all the candidate users is constructed by using the channel response of each of the candidate users.

An RRQR decomposition is performed on the channel response matrix, and at least two of the candidate users that are most linearly independent and satisfying a space division multiplexing user number required by a base station are determined as space division multiplexing users based on the result of the RRQR decomposition.

Optionally, the processor 50 constructs the channel response matrix of all the candidate users by normalizing the channel response of each of the candidate users and then taking the normalized channel response as a column element.

The processor 50 acquires a permutation matrix, a Q matrix and an R matrix by performing the RRQR decomposition of the channel response matrix, which satisfies a condition that the channel response matrix multiplied by the permutation matrix is equal to the Q matrix multiplied by the R matrix; and determines a plurality of the candidate users that are most linearly independent among all the candidate users according to the permutation matrix, determines a beamforming weight matrix of the plurality of the candidate users that are most linearly independent by using a channel response matrix, a Q matrix and an R matrix of the plurality of the candidate users that are most linearly independent, and determines the space division multiplexing user number required by the base station according to a power requirement of the base station and the beamforming weight matrix of the plurality of the candidate users that are most linearly independent; and selects at least two of the plurality of the candidate users that are most linearly independent as the space division multiplexing users according to the space division multiplexing user number.

Optionally, after at least two of the candidate users that are most linearly independent and satisfying the space division multiplexing user number required by the base station are determined as the space division multiplexing users based on the result of the RRQR decomposition, the processor 50 determines a beamforming weight matrix of the space division multiplexing users by using a channel response matrix, a Q matrix and an R matrix of the space division multiplexing users, so as to produce beams having directivity according to the beamforming weight matrix. The memory 51 may include a program storage region and a data storage region. The program storage region may store an operating system and an application program required by at least one function. The data storage region may store data created according to the use of the electronic device. In addition, the memory 51 may include, for example, a volatile memory such as a random access memory, and may also include a non-volatile memory, such as at least one disk memory, a flash memory, or other non-transient solid-state memories.

In addition, the logic instructions in the memory 51 may be implemented in the form of a software functional unit and, when sold or used as an independent product, may be stored in a computer-readable storage medium.

It will be understood by those of ordinary skill in the art that all or part of the processes in the methods of the above embodiments may be implemented by relevant hardware indicated by one or more computer programs, these programs may be stored in a non-transient computer-readable storage medium, and during the execution of these programs, the processes of the methods in the above embodiments may be implemented.

Through the method and device for selecting space division multiplexing users in FIGS. 1 and 2, the space division multiplexing users may be selected from candidate users quickly based on the result of the RRQR decomposition, thereby improving the performance of the space division multiplexing system.

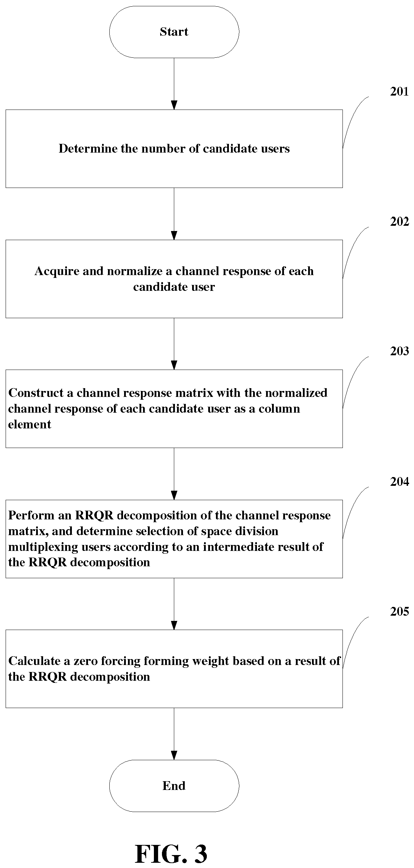

FIG. 3 is a flowchart of a method for selecting space division multiplexing users according to an embodiment of the present disclosure. The method is applied in a communication system, and as shown in FIG. 3, the method generally includes steps 201, 202, 203, 204 and 205.

In step 201, the number of candidate users is determined.

The larger the number of the candidate users, the higher the probability of selecting the users with better orthogonality, but the higher the system computational complexity of the system. The smaller the number of the candidate users, the lower the probability of selecting the users with better orthogonality, but the lower the system computational complexity of the system. The number of the candidate users may be determined according to the operation capability of the communication system and the real-time service condition.

In step 202, a channel response of each of the candidate users is acquired and normalized.

Received data of each of the candidate users passing through a channel may be acquired through a sounding signal. The channel response $\mathbf{h}_j'$ of a candidate user j may be acquired by performing the LS or MMSE channel estimation on the received data, and a normalized channel response $\mathbf{h}j=\mathbf{h}_j'/\|\mathbf{h}_j'\|$ may be acquired by normalizing the channel response $\mathbf{h}_j'$ of the candidate user j. A value of j is a candidate user set, and $\|\mathbf{h}_j'\|$ is a norm of $\mathbf{h}_j$.

In step 203, a channel response matrix is constructed with the normalized channel response of each of the candidate users as a column element.

Assuming that the channel response matrix is **H**, the number of antennas of a base station is a and the number of the candidate users is N, the dimension of H is a*N, and $\mathbf{h}_j$ is the j-th column vector of **H**.

In step 204, an RRQR decomposition is performed on the channel response matrix, and a selection of space division multiplexing users is determined according to an intermediate result of the RRQR decomposition.

A following decomposition result is acquired by performing the RRQR decomposition of **H**:

$$\mathbf{H\Pi} = \mathbf{Q}\begin{pmatrix} \mathbf{A}_M & \mathbf{E}_M \\ & \mathbf{F}_M \end{pmatrix}$$

Assuming that the number of selected space division multiplexing users is M, **Q** is an a*a-dimensional orthogonal matrix, Π is an N*N-dimensional permutation matrix, $\begin{pmatrix} \mathbf{A}_M & \mathbf{E}_M \\ & \mathbf{F}_M \end{pmatrix}$ is an R matrix, $\mathbf{A}_M$ is an M*M-dimensional upper triangular matrix, $\mathbf{E}_M$ is an M*(N-M)-dimensional matrix, and $\mathbf{F}_M$ is (a-M)*(N-M)-dimensional matrix. The RRQR decomposition algorithm has many types, and for example, may be implemented by using the column pivoting QR decomposition.

M users that are most linearly independent may be determined among N candidate users through the permutation matrix Π. All elements of the first column in the permutation matrix Π are selected, locations of the element "1" in the first column are searched, and candidate users in these locations are determined as candidate users that are most linearly independent. The algorithm is as follows:

```
location=1:N
for index=1:N
   column=Π(:,index);
   locationindex=find(column==1);
   endfor
SelectUser=location1:M
```

where, SelectUser means M users that are most linearly independent selected from the N candidate users.

A channel response matrix of the M users that are most linearly independent is a column vector construction matrix C=Q(1:M, 1:M)$\mathbf{A}_M$, and then a forming matrix (i.e., a beamforming weight matrix) of the M users that are most linearly independent is B=C(C*C)$^{-1}$. Since the base station has a transmit power limit, the forming matrix B needs to satisfy a following condition: k*trace(B*B)<P, where k denotes a power back-off factor, P denotes the transmit power limit of the base station, and trace denotes a trace of the matrix. The power back-off factor k may be set to be greater than a certain fixed value, $k_C$, and then a following condition needs to be satisfied: trace(B*B)<P/$k_C$. The trace(B*B) may be calculated through a following formula.

$$\mathrm{trace}(B^*B)=\mathrm{trace}(A_M{}^*A_M)^{-1}=\mathrm{trace}(A_M{}^{-1}(A_M{}^*)^{-1})$$

Since $A_M$ is the upper triangular matrix, the trace(B*B) may be acquired through calculation. The value of M is a maximum integer which enables trace(B*B) not to exceed $P/k_C$. where, $A_M{}^*$ is a conjugate transpose matrix of $A_M$, C* is a conjugate transpose matrix of C, B* is a conjugate transpose matrix of B, $A_M{}^{-1}$ is an inverse matrix of $A_M$, $(A_M{}^*)^{-1}$ is an inverse matrix of $A_M{}^*$, $(A_M{}^*A_M)^{-1}$ is an inverse matrix of $A_M{}^*A_M$, and $(C^*C)^{-1}$ is an inverse matrix of C*C.

In step 205, a zero forcing forming weight is calculated based on the result of the RRQR decomposition.

The channel response matrix of the M users that are most linearly independent is the column vector construction matrix C=Q(1:M, 1:M)$A_M$, and then the beamforming matrix (i.e., the beamforming weight matrix) of the M users that are most linearly independent is B=C(C*C)$^{-1}$. B may be acquired based on following calculation:

$$B=Q(1{:}M,1{:}M)A_M((Q(1{:}M,1{:}M)A_M)^*Q(1{:}M,1{:}M)A_M))^{-1}$$

$$=Q(1{:}M,1{:}M)AM(AM{*}AM){-}1$$

$$=Q(1{:}M,1{:}M)(AM{*}){-}1$$

FIG. 4 is a schematic diagram of a device for selecting space division multiplexing users according to another embodiment of the present disclosure. The device is configured to improve the space division system performance. As shown in FIG. 4, besides the candidate user channel response acquisition module 22, the channel response matrix construction module 23, the space division multiplexing user selection module 24 and the beamforming weight calculation module 25 in FIG. 2, the device is added with a candidate user number determination module 21. The candidate user number determination module 21 is configured to determine the number of candidate users. The channel response matrix construction module 23 is configured to construct a channel response matrix with a normalized channel response of each candidate user as a column element. The space division multiplexing user selection module 24 is configured to perform an RRQR decomposition of the channel response matrix, and determine a selection of space division multiplexing users according to an intermediate result of the RRQR decomposition. The beamforming weight calculation module 25 calculates a zero forcing forming weight based on the result of the RRQR decomposition.

Through the method and device for selecting space division multiplexing users in FIGS. 3 and 4, the space division performance of the communication system may be greatly improved.

According to the method and device for selecting space division multiplexing users of the embodiments of the present disclosure, the number of the candidate users is determined, a channel response of each candidate user is acquired and normalized, a channel response matrix is constructed with the normalized channel response of each candidate user as a column element, then the RRQR decomposition is performed on the channel response matrix, selection of space division multiplexing users is determined according to an intermediate result of the RRQR decomposition, and finally, a zero forcing forming weight is calculated based on the result of the RRQR decomposition.

Embodiment 1

Assuming that the number of candidate users N is 32 and the number of antennas of a base station is 64, the implementation process may be done as follows.

In step 1, the number of candidate users is determined.

The larger the number of the candidate users, the higher the probability of selecting the users with great orthogonality, but the higher the system computational complexity of the system. The smaller the number of the candidate users, the lower the probability of selecting the users with great orthogonality, but the lower the system computational complexity of the system. The number of the candidate users may be determined to be 32 according to the operation capability of the communication system and the real-time service condition.

In step 2, a channel response of each candidate user is acquired and normalized.

Received data of each candidate user passing through a channel may be acquired through a sounding signal. The channel response $\mathbf{h}_j{}'$ of a candidate user j may be acquired by performing the LS or MMSE channel estimation on the received data, and a normalized channel response $\mathbf{h}_j{=}\mathbf{h}_j{}'/\|\mathbf{h}_j\|$ may be acquired by normalizing the channel response $\mathbf{h}_j{}'$ of the candidate user j. A value of j is a candidate user set.

In step 3, the normalized channel response of each candidate user is a column element to construct a channel response matrix.

Assuming that the channel response matrix is H, the number of the antennas of a base station is 64 and the number of the candidate users is 32, the dimension of **H** is 64*32, and **h**j is the j-th column vector of H.

In step 4, an RRQR decomposition is performed on the channel response matrix, and a selection of the space division multiplexing users is determined according to an intermediate result of the RRQR decomposition.

A following decomposition result is acquired by performing the RRQR decomposition of H:

$$\mathbf{H\Pi} = \mathbf{Q}\begin{pmatrix} \mathbf{A}_M & \mathbf{E}_M \\ & \mathbf{F}_M \end{pmatrix}$$

Assuming that the number of selected space division multiplexing users is M, an 64*64-dimensional matrix **Q** is an orthogonal matrix, an 32*32-dimensional matrix Π is a permutation matrix, an M*M-dimensional matrix **A**$_M$ is an upper triangular matrix, **E**$_M$ is an M*(32-M)-dimensional matrix, and **F**$_M$ is (64-M)*(32-M)-dimensional matrix. The RRQR decomposition algorithm has many types, and for example, may be implemented by using the column pivoting QR decomposition.

M candidate users that are most linearly independent may be determined from 32 candidate users according to the permutation matrix Π.

```
location=1:32
for index=1:32
        column=Π(:,index);
        locationindex=find(column==1);
        endfor
SelectUser=location1:M
```

where, SelectUser means the M users that are most linearly independent and selected from 32 candidate users.

The channel response matrix of the M users that are most linearly independent is the column vector construction matrix C=Q(1:M, 1:M)A$_M$, and then the forming matrix of the M users that are most linearly independent is B=C(C*C)$^{-1}$. Since the base station has a transmit power limit, the forming matrix B needs to satisfy a following condition: k*trace(B*B)<P, where k denotes a power back-off factor, P denotes the transmit power limit of the base station, and trace denotes a trace of the matrix. The power back-off factor may be greater than a certain fixed value, kc, and then a following condition needs to be satisfied: trace(B*B)<P/k$_C$. The trace(B*B) may be calculated through a following formula.

$$\text{trace}(B^*B) = \text{trace}(A_M{}^*A_M)^{-1} = \text{trace}(A_M{}^{-1}(A_M{}^*)^{-1})$$

Since A$_M$ is the upper triangular matrix, the trace(B*B) may be acquired through calculation. The value of M is a maximum integer which enables trace(B*B) not to exceed P/kc.

In step 5, a zero forcing forming weight is calculated based on the result of the RRQR decomposition.

The channel response matrix of the M users that are most linearly independent is the column vector construction matrix C=Q(1:M, 1:M)A$_M$, and then the forming matrix of the M users that are most linearly independent is B=C(C*C)$^{-1}$. B may be acquired based on following calculation:

$$B = Q(1{:}M,1{:}M)A_M((Q(1{:}M,1{:}M)A_M)^*Q(1{:}M,1{:}M)A_M))^{-1}$$

$$= Q(1{:}M,1{:}M)A_M(A_M{}^*A_M)^{-1}$$

$$= Q(1{:}M,1{:}M)(A_M{}^*)^{-1}$$

Embodiment 2

Assuming that the number of candidate users N is 16 and the number of antennas of a base station is 64, the implementation process may be done as follows.

In step 1, the number of candidate users is determined.

The larger the number of the candidate users, the higher the probability of selecting the users with great orthogonality, but the higher the system computational complexity of the system. The smaller the number of the candidate users, the lower the probability of selecting the users with great orthogonality, but the lower the system computational complexity of the system. The number of the candidate users may be determined to be 16 according to the operation capability of the communication system and the real-time service condition.

In step 2, a channel response of each candidate user is acquired and normalized.

Received data of each candidate user passing through a channel may be acquired through a sounding signal. The channel response $\mathbf{h}_j'$ of a candidate user j may be acquired by performing the LS or MMSE channel estimation on the received data, and a normalized channel response $\mathbf{h}_j=\mathbf{h}_j'/\|\mathbf{h}_j'\|$ may be acquired by normalizing the channel response $\mathbf{h}_j'$ of the candidate user j. A value of j is a candidate user set.

In step 3, the normalized channel response of each candidate user is a column element to construct a channel response matrix.

Assuming that the channel response matrix is H, the number of the antennas of a base station is 64 and the number of the candidate users is 16, the dimension of **H** is 64*16, and $\mathbf{h}_j$ is the j-th column vector of **H**.

In step 4, an RRQR decomposition is performed on the channel response matrix, and a selection of the space division multiplexing users is determined according to an intermediate result of the RRQR decomposition.

A following decomposition result is acquired by performing the RRQR decomposition of H:

$$\mathbf{H\Pi} = \mathbf{Q}\begin{pmatrix} \mathbf{A}_M & \mathbf{E}_M \\ & \mathbf{F}_M \end{pmatrix}$$

Assuming that the number of selected space division multiplexing users is M, an 64*64-dimensional matrix **Q** is an orthogonal matrix, an 16*16-dimensional matrix Π is a permutation matrix, an M*M-dimensional matrix $\mathbf{A}_M$ is an upper triangular matrix, $\mathbf{E}_M$ is an M*(16-M)-dimensional matrix, and $\mathbf{F}_M$ is (64-M)*(16-M)-dimensional matrix. The RRQR decomposition algorithm has many types, and for example, may be implemented by using the column pivoting QR decomposition.

M candidate users that are most linearly independent may be determined from 16 candidate users according to the permutation matrix Π.

```
location=1:16
for index=1:16
    column=Π(:,index);
    locationindex=find(column==1);
    endfor
SelectUser=location1:M
```

where, SelectUser means the M users that are most linearly independent and selected from 16 candidate users.

The channel response matrix of the M users that are most linearly independent is the column vector construction matrix C=Q(1:M, 1:M)$\mathbf{A}_M$, and then the forming matrix of the M users having the maximum linear independence is B=C(C*C)$^{-1}$. Since the base station has a transmit power limit, the forming matrix B needs to satisfy a following condition: k*trace(B*B)<P, where k denotes a power back-off factor, P denotes the transmit power limit of the base station, and trace denotes a trace of the matrix. The optional power back-off factor is greater than a certain fixed value, $k_C$, and then a following condition needs to be satisfied: trace(B*B)<P/$k_C$. The trace(B*B) may be calculated as follows.

$$\text{trace}(\text{B}^*\text{B}) = \text{trace}(\text{A}_M{}^*\text{A}_M)^{-1} = \text{trace}(\text{A}_M{}^{-1}(\text{A}_M{}^*)^1)$$

Since $A_M$ is the upper triangular matrix, the trace(B*B) may be easily calculated. The value of M is a maximum integer which enables trace(B*B) not to exceed P/kc.

In step 5, a zero forcing forming weight is calculated based on the result of the RRQR decomposition.

The channel response matrix of the M users that are most linearly independent is the column vector construction matrix C=Q(1:M, 1:M)$\text{A}_M$, and then the forming matrix of the M users that are most linearly independent is B=C(C*C)$^{-1}$. B may be acquired based on following calculation:

$$B=Q(1:M,1:M)A_M((Q(1:M,1:M)A_M)^*Q(1:M,1:M)A_M))^{-1}$$
$$=Q(1:M,1:M)AM(AM^*AM)-1$$
$$=Q(1:M,1:M)(AM^*)-1$$

According to the embodiments of the present disclosure, users that are most linearly independent are selected from candidate users, which, compared with other algorithm for selecting space division multiplexing users, may acquire the optimal performance with lower operation amount.

## Claims

1.  A method for selecting space division multiplexing users, comprising:

    acquiring (110) a channel response of each of candidate users by performing a channel estimation on received data of each of the candidate users;
    constructing (120) a channel response matrix of all the candidate users by using the channel response of each of the candidate users; and
    performing (130) a rank-revealing quadrature rectangle (RRQR) decomposition of the channel response matrix, and determining, based on a result of the RRQR decomposition, at least two of the candidate users that are most linearly independent and satisfying a space division multiplexing user number required by a base station as the space division multiplexing users;
    **characterized in that**, wherein the step of performing (130) a rank-revealing quadrature rectangle (RRQR) decomposition of the channel response matrix, and determining, based on a result of the RRQR decomposition, at least two of the candidate users that are most linearly independent and satisfying a space division multiplexing user number required by a base station as the space division multiplexing users comprises:

    obtaining a permutation matrix, a Q matrix and an R matrix through the RRQR decomposition of the channel response matrix, wherein the channel response matrix multiplied by the permutation matrix is equal to the Q matrix multiplied by the R matrix;
    determining, based on the permutation matrix, a plurality of the candidate users that are most linearly independent among all the candidate users; and
    selecting, according to a total number of space division multiplexing users required by the base station, at least two of the candidate users from the plurality of the candidate users that are most linearly independent as the space division multiplexing users.

2.  The method of claim 1, wherein the channel response matrix of all the candidate users is constructed by using the channel response of each of the candidate users in the following manner:
    constructing the channel response matrix of all the candidate users by normalizing the channel response of each of the candidate users and taking the normalized channel response as a column element.

3.  The method of claim 1, wherein the total number of space division multiplexing users required by the base station is determined by:

    determining a beamforming weight matrix of the plurality of the candidate users that are most linearly independent by using a channel response matrix, a Q matrix and an R matrix of the plurality of the candidate users that are most linearly independent; and
    determining the total space division multiplexing user number required by the base station according to a power requirement of the base station and the beamforming weight matrix of the plurality of the candidate users that are most linearly independent.

4.  The method of claim 1 or 3, wherein after the determining, based on a result of the RRQR decomposition, at least two of the candidate users that are most linearly independent and satisfying a space division multiplexing user number required by a base station as the space division multiplexing users, the method further comprises: determining a beamforming weight matrix of the space division multiplexing users based on a channel response matrix, a Q matrix and an R matrix of the space division multiplexing users.

5. A device for selecting space division multiplexing users, comprising:

a candidate user channel response acquisition module (22), configured to acquire a channel response of each of candidate users by performing a channel estimation on received data of each of the candidate users;

a channel response matrix construction module (23), configured to construct a channel response matrix of all the candidate users by using the channel response of each of the candidate users; and

a space division multiplexing user selection module (24), configured to perform a rank-revealing quadrature rectangle (RRQR) decomposition of the channel response matrix, and determine, based on a result of the RRQR decomposition, at least two of the candidate users that are most linearly independent and satisfying a space division multiplexing user number required by a base station as the space division multiplexing users;

**characterized in that**, wherein the space division multiplexing user selection module (24) is configured to: acquire a permutation matrix, a Q matrix and an R matrix by performing the RRQR decomposition of the channel response matrix; determine, based on the permutation matrix, a plurality of the candidate users that are most linearly independent among all the candidate users;

and select at least two of the candidate users from the plurality of the candidate users that are most linearly independent as the space division multiplexing users according to a total number of space division multiplexing users required by the base station, wherein the channel response matrix multiplied by the permutation matrix is equal to the Q matrix multiplied by the R matrix.

6. The device of claim 5, wherein the space division multiplexing user selection module (24) is further configured to: determine a beamforming weight matrix of the plurality of the candidate users that are most linearly independent by using a channel response matrix, a Q matrix and an R matrix of the plurality of the candidate users that are most linearly independent, and determine the total number of space division multiplexing users required by the base station according to a power requirement of the base station and the beamforming weight matrix of the plurality of the candidate users that are most linearly independent.

7. The device of claim 5 or 6, further comprising:
a beamforming weight calculation module (25), configured to, after at least two of the candidate users that are most linearly independent and satisfying the space division multiplexing user number required by the base station are determined as the space division multiplexing users based on the result of the RRQR decomposition, determine a beamforming weight matrix of the space division multiplexing users by using a channel response matrix, a Q matrix and an R matrix of the space division multiplexing users.

8. A device for selecting space division multiplexing users, comprising: a processor (50) and a memory (51) storing instructions that, when executed by the processor (50), cause the processor (50) to:

acquire a channel response of each of candidate users by performing a channel estimation on received data of each of the candidate users;

construct a channel response matrix of all the candidate users by using the channel response of each of the candidate users; and

perform a rank-revealing quadrature rectangle (RRQR) decomposition of the channel response matrix, and determine, based on the result of the RRQR decomposition, at least two of the candidate users that are most linearly independent and satisfying a space division multiplexing user number required by a base station as the space division multiplexing users;

**characterized in that**, when executed by the processor (50), the memory (51) storing instructions further cause the processor (50) to:

obtain a permutation matrix, a Q matrix and an R matrix through the RRQR decomposition of the channel response matrix, wherein the channel response matrix multiplied by the permutation matrix is equal to the Q matrix multiplied by the R matrix;

determine, based on the permutation matrix, a plurality of the candidate users that are most linearly independent among all the candidate users; and

select, according to a total number of space division multiplexing users required by the base station, at least two of the candidate users from the plurality of the candidate users that are most linearly independent as the space division multiplexing users.

9. A computer-readable storage medium storing computer-executable instructions that, when executed by a processor, cause the processor to carry out

the method of any one of claims 1 to 4.

**Patentansprüche**

1. Verfahren zum Auswählen von Raummultiplex-Benutzern, umfassend:

   Erfassen (110) einer Kanalantwort jedes der Kandidatenbenutzer, indem eine Kanalschätzung an empfangenen Daten jedes der Kandidatenbenutzer durchgeführt wird;
   Konstruieren (120) einer Kanalantwortmatrix aller Kandidatenbenutzer, indem die Kanalantwort jedes der Kandidatenbenutzer verwendet wird; und
   Durchführen (130) einer rangerhaltenden Quadratur-Rechteck-Zerlegung (RRQR-Zerlegung) der Kanalantwortmatrix und Bestimmen, basierend auf dem Ergebnis der RRQR-Zerlegung, von mindestens zwei der Kandidatenbenutzer, die am linearsten unabhängig sind und eine Raummultiplex-Benutzeranzahl erfüllen, die von einer Basisstation als die Raummultiplex-Benutzer benötigt wird;
   **dadurch gekennzeichnet, dass** der Schritt des Durchführens (130) einer rangerhaltenden Quadratur-Rechteck-Zerlegung (RRQR-Zerlegung) der Kanalantwortmatrix und des Bestimmens, basierend auf einem Ergebnis der RRQR-Zerlegung, von mindestens zwei der Kandidatenbenutzer, die am linearsten unabhängig sind und ein Raummultiplex-Benutzeranzahl erfüllen, die von einer Basisstation als die Raummultiplex-Benutzer benötigt wird, umfasst:

   Erhalten einer Permutationsmatrix, einer Q-Matrix und einer R-Matrix durch die RRQR-Zerlegung der Kanalantwortmatrix, wobei die mit der Permutationsmatrix multiplizierte Kanalantwortmatrix gleich der mit der R-Matrix multiplizierten Q-Matrix ist;
   Bestimmen, basierend auf der Permutationsmatrix, einer Vielzahl der Kandidatenbenutzer, die unter allen Kandidatenbenutzern am linearsten unabhängig sind; und
   Auswählen, gemäß einer Gesamtzahl von Raummultiplex-Benutzern, die von der Basisstation benötigt wird, von mindestens zwei der Kandidatenbenutzer aus der Vielzahl der Kandidatenbenutzer, die am linearsten unabhängig sind, als die Raummultiplex-Benutzer.

2. Verfahren nach Anspruch 1, wobei die Kanalantwortmatrix aller Kandidatenbenutzer konstruiert wird, indem die Kanalantwort jedes der Kandidatenbenutzer auf die folgende Weise verwendet wird:
   Konstruieren der Kanalantwortmatrix aller Kandidatenbenutzer durch Normalisieren der Kanalantwort jedes der Kandidatenbenutzer und Nehmen der normalisierten Kanalantwort als ein Spaltenelement.

3. Verfahren nach Anspruch 1, wobei die Gesamtzahl von Raummultiplex-Benutzern, die von der Basisstation benötigt wird, bestimmt wird durch:

   Bestimmen einer Beamforming-Gewichtungsmatrix der Vielzahl der Kandidatenbenutzer, die am linearsten unabhängig sind, indem eine Kanalantwortmatrix, eine Q-Matrix und eine R-Matrix der Vielzahl der Kandidatenbenutzer, die am linearsten unabhängig sind, verwendet werden; und
   Bestimmen der gesamten Raummultiplex-Benutzeranzahl, die von der Basisstation benötigt wird, gemäß einer Leistungsanforderung der Basisstation und der Beamforming-Gewichtungsmatrix der Vielzahl der Kandidatenbenutzer, die am linearsten unabhängig sind.

4. Verfahren nach Anspruch 1 oder 3, wobei nach dem Bestimmen, basierend auf einem Ergebnis der RRQR-Zerlegung, mindestens zwei der Kandidatenbenutzer, die am linearsten unabhängig sind und eine Raummultiplex-Benutzeranzahl erfüllen, die von einer Basisstation als die Raummultiplex-Benutzer benötigt wird, das Verfahren ferner umfasst: Bestimmen einer Beamforming-Gewichtungsmatrix der Raummultiplex-Benutzer basierend auf einer Kanalantwortmatrix, einer Q-Matrix und einer R-Matrix der Raummultiplex-Benutzer.

5. Vorrichtung zum Auswählen von Raummultiplex-Benutzern, umfassend:

   ein Kanalantwort-Erhebungsmodul (22) von Kandidatenbenutzern, das konfiguriert ist, um eine Kanalantwort jedes der Kandidatenbenutzer zu erheben, indem eine Kanalschätzung an empfangenen Daten jedes der Kandidatenbenutzer durchgeführt wird;
   ein Kanalantwortmatrix-Konstruktionsmodul (23), das konfiguriert ist, um eine Kanalantwortmatrix aller Kandidatenbenutzer zu konstruieren, indem die Kanalantwort jedes der Kandidatenbenutzer verwendet wird; und

ein Raummultiplex-Benutzerauswahlmodul (24), das konfiguriert ist, um eine rangerhaltende Quadratur-Rechteck-Zerlegung (RRQR-Zerlegung) der Kanalantwortmatrix durchzuführen und basierend auf einem Ergebnis der RRQR-Zerlegung mindestens zwei der Kandidatenbenutzer zu bestimmen, die am linearsten unabhängig sind und eine Raummultiplex-Benutzeranzahl erfüllen, die von einer Basisstation als die Raummultiplex-Benutzer benötigt wird;

**dadurch gekennzeichnet, dass** das Raummultiplex-Benutzerauswahlmodul (24) konfiguriert ist zum: Erheben einer Permutationsmatrix, einer Q-Matrix und einer R-Matrix, indem die RRQR-Zerlegung der Kanalantwortmatrix durchgeführt wird;

Bestimmen, basierend auf der Permutationsmatrix, einer Vielzahl der Kandidatenbenutzer, die unter allen Kandidatenbenutzern am linearsten unabhängig sind; und Auswählen von mindestens zwei der Kandidatenbenutzer aus der Vielzahl der Kandidatenbenutzer, die am linearsten unabhängig sind, als die Raummultiplex-Benutzer gemäß einer Gesamtzahl von Raummultiplex-Benutzern, die von der Basisstation benötigt wird, wobei die Kanalantwortmatrix multipliziert mit der Permutationsmatrix gleich der Q-Matrix multipliziert mit der R-Matrix ist.

6. Vorrichtung nach Anspruch 5, wobei das Raummultiplex-Benutzerauswahlmodul (24) ferner konfiguriert ist zum: Bestimmen einer Beamforming-Gewichtungsmatrix der Vielzahl der Kandidatenbenutzer, die am linearsten unabhängig sind, indem eine Kanalantwortmatrix, eine Q-Matrix und eine R-Matrix der Vielzahl der Kandidatenbenutzer, die am linearsten unabhängig sind, verwendet werden, und Bestimmen der Gesamtzahl von Raummultiplex-Benutzern, die von der Basisstation benötigt wird, gemäß einer Leistungsanforderung der Basisstation und der Beamforming-Gewichtungsmatrix der Vielzahl der Kandidatenbenutzer, die am linearsten unabhängig sind.

7. Vorrichtung nach Anspruch 5 oder 6, die ferner Folgendes umfasst:
ein Beamforming-Gewichtungsberechnungsmodul (25), das konfiguriert ist, um, nachdem mindestens zwei der Kandidatenbenutzer, die am linearsten unabhängig sind und die Raummultiplex-Benutzeranzahl erfüllen, die von der Basisstation benötigt wird, basierend auf dem Ergebnis der RRQR-Zerlegung als die Raummultiplex-Benutzer bestimmt wurden, eine Beamforming-Gewichtungsmatrix der Raummultiplex-Benutzer, indem eine Kanalantwortmatrix, eine Q-Matrix und eine R-Matrix der Raummultiplex-Benutzer verwendet werden, zu bestimmen.

8. Vorrichtung zum Auswählen von Raummultiplex-Benutzern, umfassend: einen Prozessor (50) und einen Speicher (51), der Anweisungen speichert, die, wenn sie durch den Prozessor (50) ausgeführt werden, den Prozessor (50) veranlassen zum:

Erheben einer Kanalantwort jedes der Kandidatenbenutzer, indem eine Kanalschätzung an empfangenen Daten jedes der Kandidatenbenutzer durchgeführt wird;
Konstruieren einer Kanalantwortmatrix aller Kandidatenbenutzer, indem die Kanalantwort jedes der Kandidatenbenutzer verwendet wird; und
Durchführen einer rangerhaltenden Quadratur-Rechteck-Zerlegung (RRQR-Zerlegung) der Kanalantwortmatrix und Bestimmen, basierend auf dem Ergebnis der RRQR-Zerlegung, von mindestens zwei der Kandidatenbenutzer, die am linearsten unabhängig sind und eine Raummultiplex-Benutzeranzahl erfüllen, die von einer Basisstation als die Raummultiplex-Benutzer benötigt wird;
**dadurch gekennzeichnet, dass** bei Ausführung durch den Prozessor (50), die im Speicher (51) gespeicherten Anweisungen den Prozessor (50) ferner veranlassen zum:

Erhalten einer Permutationsmatrix, einer Q-Matrix und einer R-Matrix durch die RRQR-Zerlegung der Kanalantwortmatrix, wobei die Kanalantwortmatrix multipliziert mit der Permutationsmatrix gleich der Q-Matrix multipliziert mit der R-Matrix ist;
Bestimmen, basierend auf der Permutationsmatrix, einer Vielzahl der Kandidatenbenutzern, die unter allen Kandidatenbenutzern am linearsten unabhängig sind; und
Auswählen, gemäß einer Gesamtzahl von Raummultiplex-Benutzern, die von der Basisstation benötigt wird, von mindestens zwei der Kandidatenbenutzer aus der Vielzahl der Kandidatenbenutzer, die am linearsten unabhängig sind, als die Raummultiplex-Benutzer.

9. Computerlesbares Speichermedium, das computerausführbare Anweisungen speichert, die, wenn sie durch einen Prozessor ausgeführt werden, den Prozessor veranlassen, das Verfahren nach einem der Ansprüche 1 bis 4 durchzuführen.

**Revendications**

1. Procédé de sélection d'utilisateurs de multiplexage par division spatiale, comprenant :

   l'acquisition (110) d'une réponse de canal de chacun des utilisateurs candidats en effectuant une estimation de canal sur les données reçues de chacun des utilisateurs candidats ;
   la construction (120) d'une matrice de réponse de canal de tous les utilisateurs candidats à l'aide de la réponse de canal de chacun des utilisateurs candidats ; et
   la réalisation (130) d'une décomposition en rectangle de quadrature de révélation de rang (RRQR) de la matrice de réponse de canal, et la détermination, sur la base d'un résultat de la décomposition RRQR, d'au moins deux des utilisateurs candidats qui sont les plus linéairement indépendants et qui satisfont à un nombre d'utilisateurs de multiplexage par division spatiale requis par une station de base en tant qu'utilisateurs de multiplexage par division spatiale ;
   **caractérisé en ce que**, dans lequel l'étape de réalisation (130) d'une décomposition en rectangle de quadrature de révélation de rang (RRQR) de la matrice de réponse de canal, et de détermination, sur la base d'un résultat de la décomposition RRQR, d'au moins deux des utilisateurs candidats qui sont les plus linéairement indépendants et qui satisfont à un nombre d'utilisateurs de multiplexage par division spatiale requis par une station de base en tant qu'utilisateurs de multiplexage par division spatiale comprend :

   l'obtention d'une matrice de permutation, d'une matrice Q et d'une matrice R par la décomposition RRQR de la matrice de réponse de canal, dans lequel la matrice de réponse de canal multipliée par la matrice de permutation est égale à la matrice Q multipliée par la matrice R ;
   la détermination, sur la base de la matrice de permutation, d'une pluralité d'utilisateurs candidats qui sont les plus linéairement indépendants parmi tous les utilisateurs candidats ; et
   la sélection, selon un nombre total d'utilisateurs de multiplexage par division spatiale requis par la station de base, d'au moins deux des utilisateurs candidats parmi la pluralité d'utilisateurs candidats qui sont les plus linéairement indépendants en tant qu'utilisateurs de multiplexage par division spatiale.

2. Procédé selon la revendication 1, dans lequel la matrice de réponse de canal de tous les utilisateurs candidats est construite à l'aide de la réponse de canal de chacun des utilisateurs candidats de la manière suivante :
   la construction de la matrice de réponse de canal de tous les utilisateurs candidats en normalisant la réponse de canal de chacun des utilisateurs candidats et en prenant la réponse de canal normalisée comme élément de colonne.

3. Procédé selon la revendication 1, dans lequel le nombre total d'utilisateurs de multiplexage par division spatial requise par la station de base est déterminé par :

   la détermination d'une matrice de pondération de formation de faisceau de la pluralité des utilisateurs candidats qui sont les plus linéairement indépendants à l'aide d'une matrice de réponse de canal, d'une matrice Q et d'une matrice R de la pluralité des utilisateurs candidats qui sont les plus linéairement indépendants ; et
   la détermination du nombre total d'utilisateurs de multiplexage par division spatiale requis par la station de base selon une exigence de puissance de la station de base et la matrice de pondération de formation de faisceau de la pluralité d'utilisateurs candidats qui sont les plus linéairement indépendants.

4. Procédé selon la revendication 1 ou 3, dans lequel après la détermination, sur la base d'un résultat de la décomposition RRQR, d'au moins deux des utilisateurs candidats qui sont les plus linéairement indépendants et satisfaisant un nombre d'utilisateur de multiplexage par division spatiale requis par une station de base comme utilisateurs de multiplexage par division spatiale, le procédé comprend en outre : la détermination d'une matrice de pondération de formation de faisceau des utilisateurs de multiplexage par division spatiale sur la base d'une matrice de réponse de canal, d'une matrice Q et d'une matrice R des utilisateurs de multiplexage par division spatiale.

5. Dispositif de sélection d'utilisateurs de multiplexage par division spatiale, comprenant :

   un module d'acquisition de réponse de canal d'utilisateur candidat (22), configuré pour acquérir une réponse de canal de chacun des utilisateurs candidats en effectuant une estimation de canal sur les données reçues de chacun des utilisateurs candidats ;
   un module de construction de matrice de réponse de canal (23), configuré pour construire une matrice de réponse de canal de tous les utilisateurs candidats à l'aide de la réponse de canal de chacun des utilisateurs candidats ; et

un module de sélection d'utilisateur de multiplexage par division spatiale (24) configuré pour effectuer une décomposition en rectangle de quadrature de révélation de rang (RRQR) de la matrice de réponse de canal, et déterminer, sur la base d'un résultat de la décomposition RRQR, d'au moins deux des utilisateurs candidats qui sont les plus linéairement indépendants et qui satisfont à un nombre d'utilisateurs de multiplexage par division spatiale requis par une station de base en tant qu'utilisateurs de multiplexage par division spatiale ; **caractérisé en ce que** le module de sélection d'utilisateur de multiplexage par division spatiale (24) est configuré pour :

acquérir une matrice de permutation, une matrice Q et une matrice R en effectuant la décomposition RRQR de la matrice de réponse de canal ; déterminer, sur la base de la matrice de permutation, une pluralité d'utilisateurs candidats qui sont les plus linéairement indépendants parmi tous les utilisateurs candidats ; et sélectionner au moins deux des utilisateurs candidats parmi la pluralité des utilisateurs candidats qui sont les plus linéairement indépendants en tant qu'utilisateurs de multiplexage par division spatiale selon un nombre total d'utilisateurs de multiplexage par division spatiale requis par la station de base, dans lequel la matrice de réponse de canal multipliée par la matrice de permutation est égale à la matrice Q multipliée par la matrice R.

6. Dispositif selon la revendication 5, dans lequel le module de sélection d'utilisateur de multiplexage par division spatiale (24) est en outre configuré pour : déterminer une matrice de pondération de formation de faisceau de la pluralité des utilisateurs candidats qui sont les plus linéairement indépendants à l'aide d'une matrice de réponse de canal, d'une matrice Q et d'une matrice R de la pluralité des utilisateurs candidats qui sont les plus linéairement indépendants, et déterminer le nombre total d'utilisateurs de multiplexage par division spatiale requis par la station de base selon une exigence de puissance de la station de base et la matrice de pondération de formation de faisceau de la pluralité des utilisateurs candidats qui sont les plus linéairement indépendants.

7. Dispositif selon la revendication 5 ou 6, comprenant en outre :
un module de calcul de pondération de formation de faisceau (25), configuré pour, après qu'au moins deux des utilisateurs candidats qui sont les plus linéairement indépendants et satisfaisant au nombre d'utilisateurs de multiplexage par division spatiale requis par la station de base sont déterminés comme les utilisateurs de multiplexage par division spatiale sur la base du résultat de la décomposition RRQR, déterminer une matrice de pondération de formation de faisceau des utilisateurs de multiplexage par division spatiale à l'aide d'une matrice de réponse de canal, d'une matrice Q et d'une matrice R des utilisateurs de multiplexage par division spatiale.

8. Dispositif de sélection d'utilisateurs de multiplexage par division spatiale, comprenant : un processeur (50) et une mémoire (51) stockant des instructions qui, lorsqu'elles sont exécutées par le processeur (50), amènent le processeur (50) à :

acquérir une réponse de canal de chacun des utilisateurs candidats en effectuant une estimation de canal sur les données reçues de chacun des utilisateurs candidats ;
construire une matrice de réponse de canal de tous les utilisateurs candidats à l'aide de la réponse de canal de chacun des utilisateurs candidats ; et
réaliser une décomposition en rectangle de quadrature de révélation de rang (RRQR) de la matrice de réponse de canal, et déterminer, sur la base d'un résultat de la décomposition RRQR, d'au moins deux des utilisateurs candidats qui sont les plus linéairement indépendants et qui satisfont à un nombre d'utilisateurs de multiplexage par division spatiale requis par une station de base en tant qu'utilisateurs de multiplexage par division spatiale ; **caractérisé en ce que**, lorsqu'elle est exécutée par le processeur (50), la mémoire (51) stockant les instructions amène en outre le processeur (50) à :

obtenir une matrice de permutation, une matrice Q et une matrice R par la décomposition RRQR de la matrice de réponse de canal, dans lequel la matrice de réponse de canal multipliée par la matrice de permutation est égale à la matrice Q multipliée par la matrice R ;
déterminer, sur la base de la matrice de permutation, une pluralité d'utilisateurs candidats qui sont les plus linéairement indépendants parmi tous les utilisateurs candidats ; et
sélectionner, selon un nombre total d'utilisateurs de multiplexage par division spatiale requis par la station de base, d'au moins deux des utilisateurs candidats parmi la pluralité d'utilisateurs candidats qui sont les plus linéairement indépendants en tant qu'utilisateurs de multiplexage par division spatiale.

9. Support de stockage lisible par ordinateur stockant des instructions exécutables par ordinateur qui, lorsqu'elles sont exécutées par un processeur, amènent le processeur à mettre en œuvre le procédé selon l'une quelconque des revendications 1 à 4 .

Acquire a channel response of each of candidate users by performing a channel estimation on received data of each of the candidate users — 110

Construct a channel response matrix of all candidate users by using the channel response of each of the candidate users — 120

Perform an RRQR decomposition of the channel response matrix, and determine, based on a result of the RRQR decomposition, candidate users that are most linearly independent and satisfy a space division multiplexing user number requirement of a base station as space division multiplexing users — 130

# FIG. 1

22

23

Candidate user channel response acquisition module

Channel response matrix construction module

24

25

Space division multiplexing user selection module

Beamforming weight calculation module

# FIG. 2

```
                    ┌─────────────────┐
                    │      Start      │
                    └─────────────────┘
                             │
                             ▼
        ┌────────────────────────────────────────────┐   201
        │                                            │
        │      Determine the number of candidate users │
        │                                            │
        └────────────────────────────────────────────┘
                             │
                             ▼
        ┌────────────────────────────────────────────┐   202
        │                                            │
        │   Acquire and normalize a channel response of each │
        │                  candidate user             │
        │                                            │
        └────────────────────────────────────────────┘
                             │
                             ▼
        ┌────────────────────────────────────────────┐   203
        │ Construct a channel response matrix with the normalized │
        │ channel response of each candidate user as a column │
        │ element                                    │
        └────────────────────────────────────────────┘
                             │
                             ▼
        ┌────────────────────────────────────────────┐   204
        │ Perform an RRQR decomposition of the channel response │
        │ matrix, and determine selection of space division │
        │ multiplexing users according to an intermediate result of │
        │ the RRQR decomposition                     │
        └────────────────────────────────────────────┘
                             │
                             ▼
        ┌────────────────────────────────────────────┐   205
        │ Calculate a zero forcing forming weight based on a result of │
        │ the RRQR decomposition                     │
        └────────────────────────────────────────────┘
                             │
                             ▼
                    ┌─────────────────┐
                    │       End       │
                    └─────────────────┘
```

# FIG. 3

**FIG. 4**

**FIG. 5**

**EP 3 567 741 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 20160043783 A1